# EUROPEAN PATENT SPECIFICATION

(11) **EP 3 722 645 B1**
(45) Date of publication and mention of the grant of the patent: **02.06.2021**
(21) Application number: 19020284.6
(22) Date of filing: 12.04.2019
(51) Int. Cl.: F16L 5/04, A62C 2/06, F16L 55/10

(54) **METHOD FOR RETROFITTING FIRESTOP TO PIPE**
VERFAHREN ZUM NACHRÜSTEN VON BRANDSCHUTZ AN ROHRLEITUNGEN
PROCÉDÉ DE RÉTROMONTAGE D'UN COUPE-FEU SUR UN TUYAU

(43) Date of publication of application: 14.10.2020
(73) Proprietor: Hämäläinen, Sami, 00930 Helsinki (FI)
(72) Inventor: Hämäläinen, Sami, 00930 Helsinki (FI)
(74) Representative: Sach, Greg Robert

(56) References cited:
- DE-U1-202013 002 916
- GB-A- 2 216 220
- US-A1- 2014 230 918
- US-A1- 2017 030 609

## Description

Area of technology: an invention relates to a firestop installation to a pipe to prevent spreading of fire along the pipe. The invention especially relates to a firestop to be implemented within a plumbing renovation.

### Background of the technology

It is important from a point of view of fire safety that fire cannot freely spread from an apartment to another or from an attic or a cellar space to an apartment. Nevertheless buildings must have inlets or ducts for sewer (drain) or air conditioning pipes. The most common manufacture materials for an air condition pipe are galvanized steel and plastic. An inlet from a fire compartment to another fire compartment is a risk but the inlet can be blocked with a firestop implemented in a correct manner. The firestop is intended for preventing spreading of fire through an inlet between floors of building, or through another structural inlet. Heat spreads in a space in three various manners which are known as rad convention, radiation, and conduction. Conduction means spreading of heat with flowing material, i.e. fluid, wherein the fluid is, for example, air heated by fire. In the following some prior art firestop techniques are discussed.

A firestop sleeve can be used as a firestop that is installed around an outer surface of a sewer pipe made of plastic. The sleeve includes material to be expanded a lot due to heat and nonflammable or weakly burning material, such as graffiti. Because the pipe made of plastic softens in fire, the expanding material cuts the sewer pipe by squeezing it and the graffiti simultaneously blocks the inlet. Instead of a firestop sleeve a term "fire cuff' is used in the prior art.

In addition to the firestop sleeve, the prior art is represented by a pipe component that includes material to be expanded in heat. Said pipe component is installed around a pipe part made of plastic.

A firestop to a sewer pipe being made of cast iron is implemented, for example, by using fire protection wool so that a piece of fire protection wool surrounds the sewer pipe one and half meter in both fire compartments. Then the piece of fire protection wool prevents spreading of fire, due to convention or conduction, via the sewer pipe from one fire compartment to another.

Cast iron pipes are common in old buildings and they are still used in sewerage. Cast iron pipes get rusty, they erode due to sewer gas, and their junction points are prone to leaks. Lining is a known method to implement a plumbing renovation and it suits for cast iron pipes, for example. Within the lining a flexible lining hose (a liner) is saturated with epoxy resin and installed inside a pipe, and the lining hose hardens therein when drying. In this manner leak spots or risky spots will be filled. New cast iron pipes are coated inside with epoxy resin to prevent their corrosion or erosion.

In an air conditioning pipe a firestop can be implemented with a damper. During fire an automated apparatus moves the damper to closed position closing in this manner the air conditioning pipe.

In the following publications a firestop is implemented inside a pipe or piping part. GB2471115 and EP1046412 concern parts which are made of plastic and which include firestop material. RU2640175 presents a drainage well including firestop material. GB2404232 presents a pipe whose inner surface comprises firestop material. US4267853 presents a gas pipe comprising firestop material and this publication describes a manufacturing method of the gas pipe. US3904111 describes a pipe which has at least one layer comprising material that will expand due to heat. As can be detected on the basis of the above mentioned publications, a number of various pipes or piping parts with have been developed for building piping that comprises a firestop GB2216220 discloses a method for retrofitting a firestop to a pipe from the outside. US2014/230918 discloses a steel pipe with a firestop inside the pipe.

A prior art problem is catching fire inside of cast iron pipes, or some other metal sewer pipes when they are missing a firestop and they include epoxy coating or some other burning material. In other words, fire may heat a sewer pipe so hot that its inner surface starts to burn. Then fire may proceed inside the sewer pipe from a fire compartment to another. A before described a firestop sleeve suits for retrofitting installation but it cannot prevent fire to proceed inside a cast iron sewer pipe.

Another prior art problem relates to an air conditioning pipe that has a damper inside of it. During fire the damper fully closes the air conditioning pipe but even in open position the damper partly closes the air conditioning pipe. Therefore, the damper hampers cleaning of the air conditioning pipe. In more detail, a brush to be used in the cleaning cannot pass the dumper, or the brush may get stuck to the damper.

### Summary of the invention

An aspect of the invention is to solve at least one of the above-mentioned prior art problem concerning retrofitting of a firestop to a pipe when the firestop must be implemented inside the pipe. The pipe is, for example, a part of a sewer piping or air conditioning piping, and the purpose of the firestop is to prevent spreading of fire inside the pipe. It is reasonable to avoid unnecessary deconstruction of the existing piping or constructions. The retrofitting of the firestop to a pipe comprises a number of technical challenges such as conveying the firestop material remote from some spot, for example, tens of meters to a border spot of fire compartments. The other challenge concerns attaching the firestop in a reliable manner and the third challenge concerns protecting a firestop from the consuming effect of pass flowing fluid.

Another aspect of the invention is to place a firestop inside a pipe, for example, within a plumbing renovation.

Another aspect of the invention is to replace an air condition channel damper with a piece of firestop material installed inside the pipe.

The invention concerns a method for retrofitting a firestop to a pipe that is intended to be used as a pipe for conveying fluid, the firestop comprising a piece of firestop material to be expanded due to heat. The method comprises at least
revealing a pipe inner surface at an installation spot for the retrofitting of the firestop,
conveying by a conveying tool the piece of firestop material from the installation spot along the pipe to a border spot of fire compartments,
directing a fastener by a directing tool or by the conveying tool towards the pipe inner surface, and
attaching the piece of the firestop material by the fastener at the border spot inside the pipe.

In one embodiment at least one the following tools to be used in the method is intended for lining: the conveying tool, the fastener, the directing tool.

Method further comprises the firestop implemented in accordance with the method.

### Brief description of the drawings

The invention is described in the following more precisely referring the accompanying drawings in which:
FIGURE 1 shows a first embodiment of a firestop,
FIGURE 2 shows a second embodiment of a firestop,
FIGURE 3A shows a firestop retrofitting method as a flow chart,
FIGURE 3B shows optional steps for the first and second embodiments,
FIGURE 4 shows four examples of tools for conveying firestop material,
FIGURE 5 shows attaching simultaneously a multiple pieces of firestop to a pipe,
FIGURE 6A shows use of a lining hose as a conveying tool of a firestop,
FIGURE 6B shows a lining hose and a firestop in a perspective view,
FIGURE 7 shows a third embodiment of a firestop,
FIGURE 8A shows a fourth embodiment of a firestop,
FIGURE 8B shows a firestop in lengthwise direction,
FIGURE 9 shows optional stages relating to verifying of a firestop,
FIGURE 10 shows other optional method stages.

### Detailed description of the invention

It is appreciated that the following embodiments are exemplary, and although the specification may refer to some embodiment, the reference is usually one possible option. Features included in various embodiments can be combined together and new features can be formed in this manner.

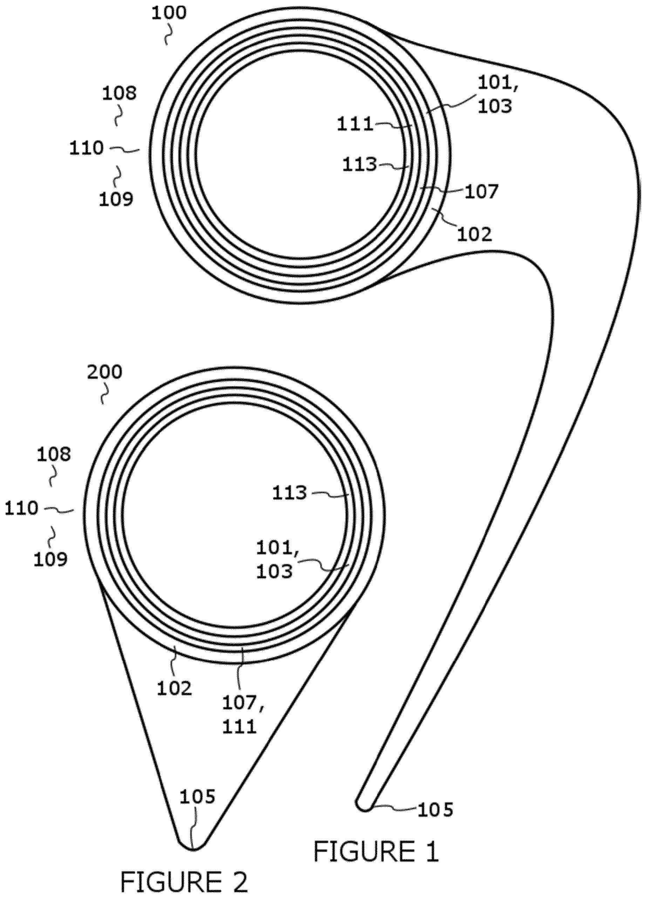

**FIGURE 1** shows a first embodiment 100 of a firestop 101 in pipe 102 that is cut at a spot of firestop 101. Pipe 102 is, for example, a sewer pipe or some other pipe intended for conveying fluid.

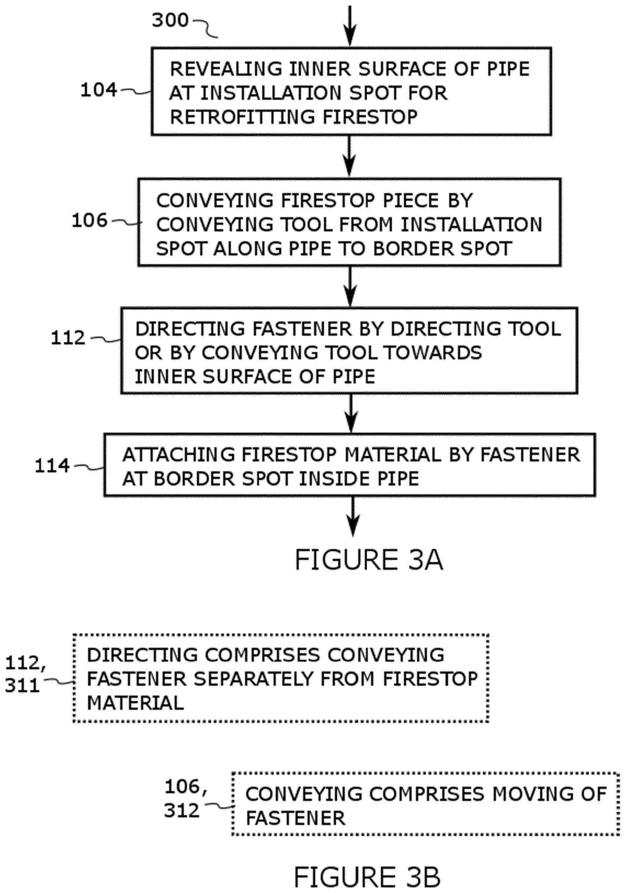

In the first embodiment a preliner, or a corresponsive product, operates as a conveying tool 107. Firestop 101 comprises a piece of firestop material 103 to be expanded due to heat. The method intended for retrofitting of firestop material 103 comprises revealing 104 a pipe inner surface at installation spot 105 of a lining hose for the retrofitting the firestop. In some cases the retrofitting can be performed from a WC (water-closet) space and then the revealing the inner surface of pipe 102 means detaching a water-closet pan. Concerning cast iron sewer pipe revealing 104 usually means opening bolts and nuts. Revealing 104 means in a number of cases that pipe 102 is cut at installation spot 105. The next stage is conveying 106 the piece of firestop material from the installation spot along the pipe to a border spot 110 of fire compartments 108, 109. The method further comprises directing 112, by a directing tool 113, a fastener 111 to be used in the attaching of the piece of firestop material 103 towards the pipe inner surface, and attaching 114 the piece of firestop material 103 by fastener 111 inside the pipe (stages 104, 106, 112, and 114) are show in figure 3. At least one of the following tools to be used in the method is intended for lining: conveying tool 107, fastener 111, or directing tool 113.

Figure 1 shows first embodiment 100 of firestop 101 inside pipe 102, wherein border spot 110 of fire compartments 108, 109 are viewed as a cross-section and in lengthwise. Pipe 102 extends from installation spot 105 to at least to border spot 110. The fire to be installed to pipe 102 comprises firestop material 103 that expands due to heat and is attached with fastener 11 towards the inner surface of pipe 102. Fastener 111 is, for example, lining hose saturated in epoxy. Polyester resin is mentioned as one possible alternative for epoxy.

In one embodiment pipe 102 is one of the following pipes: a sewer pipe, an air conditioning pipe, a water pipe, or a gas pipe. In one embodiment border spot 110 of fire compartments is located in a building.

In the example in figure 1 directing tool 113 is a calibration hose to be used in lining. The calibration hose is used in an open-end installation in which a sewer pipe is reachable only from its one end and a lining hose (a liner) is installed therein by using the calibration hose. Directing tool 113, i.e. calibration hose, has pressure inside it and the pressure is resulted in with compressed air, steam, or water. Due to the pressure directing tool directs and squeezed fastener the liner to the wall of pipe 102. Conveying tool 107, which is located between fastener 111 and pipe 102, is in this example a preliner to be used in the lining. If required, the preliner is placed inside the sewer pipe before the lining hose to protect the lining hose from sharp edges or moisture. The preliner also suits for conveying tool 107 of a piece of firestop material 103. The piece of firestop material 103 is, for example, a piece cut from a firestop tape roll. The firestop band roll includes a glue surface protected by a cover paper and the piece, i.e. the piece of firestop material 103, is attached with its glue surface to conveying tool 107 before tucking conveying tool 107 into pipe 102. When conveying tool 107 is tucked into pipe 102, for example, by compressed air and simultaneously the piece of firestop 103 is travelled to border spot 110 of fire compartments 108, 109 for the attaching. Then the lining hose, i.e. fastener 111 is tucked into pipe 102 by using the calibration hose. Lastly, the calibration hose, i.e. directing tool 113, is extracted from pipe 102.

**FIGURE 2** shows a second embodiment 200 of the piece of firestop 103 in pipe 102 that is cut at the location of firestop 103. The lining hose is saturated, for example, with epoxy and thus it operates with the epoxy as fastener 111. Because the lining hose is tucked into pipe 102, it operates as conveying tool of firestop material 103. Due to the pressurizing the lining hose further operates as directing tool 113.

The inner surface of the lining hose is cellular material such as felt and the foil of the lining hose is made of e.g. polyester, and before the installation the foil is located on the outer surface of the lining hose. Within the installation (within the tucking) the inner surface and the outer surface of the lining hose are swapped and thus the cellular material gets located against pipe 102. Firestop material 103 for firestop 101 is placed inside the lining hose before tucking conveying tool 107 from installation spot 105 into pipe 102.

Firestop material 103 is possibly placed inside the lining hose already within its manufacture. When conveying tool 107 is pushed into pipe 102, for example, with compressed air, firestop material 103 is moved to border spot 110 of fire compartments.

**FIGURE 3A** shows as a flow chart a method 300 intended for retrofitting firestop 101. Method 300 comprises four stages which are: 1) revealing 104 the pipe inner surface at an installation spot for retrofitting the firestop, 2) conveying 106 by a conveying tool a firestop material piece from the installation spot along the pipe to a border spot of fire compartments, 3) directing 112 by a directing tool or by the conveying tool a fastener to be used in attaching of the firestop material piece towards the pipe inner surface, and 4) attaching 114 by the fastener the stop material piece at a border spot in the pipe.

**FIGURE 3B** shows optional stages of method 300. Concerning an implementation of first embodiment 100 of firestop 101 directing 112 comprises conveying fastener 111 separately from the piece of firestop material 103. Thus, the piece of firestop material 103 and fastener 111 are moveable by different tools to the border spot of the fire compartments. Concerning an implementation of second embodiment 200 of firestop 101 conveying 106 of the piece of firestop material comprises moving 302 of fastener 111 by using conveying tool 107. Thus, the piece of firestop material 103 and fastener 111 are moveable by the same tool to a border spot of fire compartments.

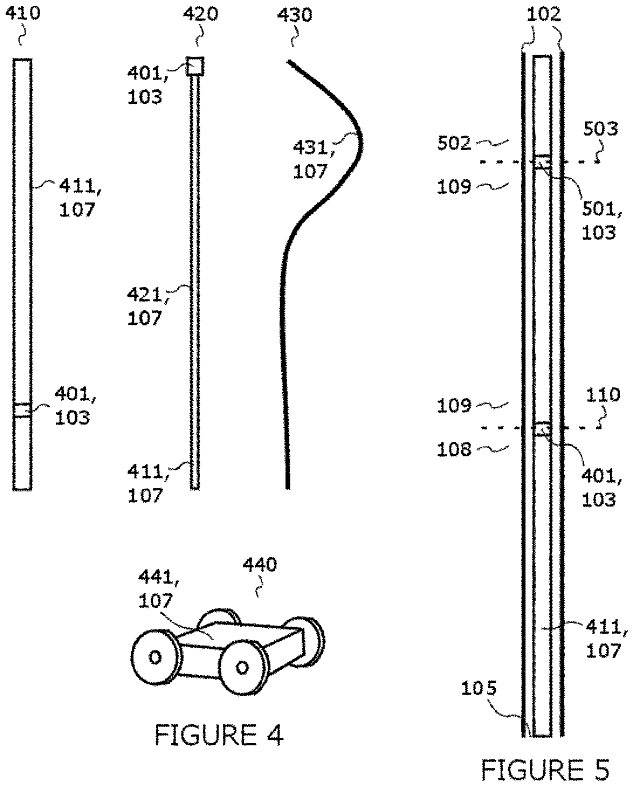

**FIGURE 4** shows four examples 410, 420, 430, 440 of conveying tool 107 for conveying the piece of firestop material 103 to border spot 110 of fire compartments.

A first example 410 relates to use of a preliner 411 or a corresponsive textile, or a net as conveying tool 107. A firestop piece, which is cut from a firestop tape roll and includes a glue surface, represents such solid piece 401 that includes the piece of firestop material 103 and can be attached with the glue surface to preliner 411. First example 410 also applies to a plastic pipe intended for coating a sewer pipe.

A second example 420 relates to use of a push rod as conveying tool 107 for the piece of firestop material 103. Also in this example the piece of firestop material 103 is included in solid piece 401. Solid piece 401 is attached to the end of a push rod and is moveable with it, for example, from a distance of twenty meters to the border spot of the fire compartments. Pipe 102 may be straight, or it may include curves. Push rod 421 should be flexible to pass the curves. If pipe 102 is straight, push rod may be inflexible.

A third example 430 relates to use of a hose 431 as conveying tool 107. Hose 431 is, for example, a hydraulic hose. Nevertheless, if hose 431 is rigid enough, it can be pushed at least few meters inside a pipe.

A fourth example 440 relates to a robot 441 that is equipped with wheels or caterpillar tracks. Robot 441 can be used to move a camera and/or hose 431 along a pipe in order to verify from the camera pictures the lining inside the pipe. Robot 441 suits (best) for conveying tool 107 of the piece of firestop material 103 when a distance from the installation spot to the border spot of fire compartments is long and the pipe does not include too tight inclination or declination angles.

**FIGURE 5** shows attaching simultaneously multiple firestop pieces to pipe 102, which enhances productivity of the installation work and is one benefit of method 300. In one embodiment of method 300 conveying 106 firestop material 103 comprises moving by conveying tool 107 another piece 501 of firestop material to another border spot 503 of other fire compartments 109, 502. Conveying tool 107 in the example of figure 5 is preliner 411 and preliner 411 is tucked from installation spot 105 into pipe 102 such that the piece of firestop material 103 is located at border spot 110 of fire compartments 108, 109 and (the other) piece 501 of firestop material is located at (the other) border spot 503 of fire compartments 109, 502. Firestop material 103 is included in solid piece 401, i.e. in a piece of a firestop tape roll, and it is attached with its glue surface to preliner 411 before tucking preliner 411 into pipe 102. Piece 501 of firestop material is a corresponsive a piece of a firestop tape roll. If required, more than two firestop tape roll pieces can be attached to preliner 411. In high buildings a vertical sewer pipe may couple multiple apartments or other fire compartments. For example, if the fire compartments are three meters high, firestop material pieces will be attached to preliner 411 such that their mutual distances are three meters.

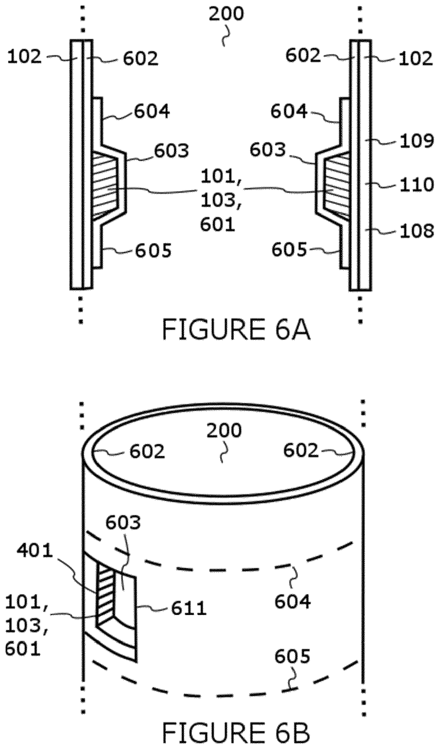

**FIGURE 6A** shows use of a lining hose as conveying tool 107. Pipe 102 is considered as a cross-section and in lengthwise. Firestop 101 is implemented in accordance with second embodiment 200 and it is located in a pocket 601 formed to a lining hose 602. Lining hose 602 resembles a regular lining hose but a textile piece 603 whose manufacturing material is e.g. felt is attached inside of it. Textile piece 603 extends around lining hose 602 and it is attached to lining hose 602 with stitches 604, 605 such that the piece of firestop material 103 (marked in the figure with slashed lines) is enclosed inside pocket 601 formed by textile piece 603 and lining hose 602. If required, multiple pockets for multiple firestop material pieces can be made to lining hose 602.

**FIGURE 6B** shows firestop 101 and lining hose 602 of the previous figure in a perspective view. In the manufacturing phase of lining hose 602 a (rectangular) feeding gab 611 for the piece of firestop material is cut to lining hose 602. In addition, textile piece 603 is stitched with stitches 604, 605 to lining hose 602 in the manufacturing phase of lining hose 602 such that textile piece 603 extends around lining hose 602 and creates with lining hose 602 pocket 601 that has annular form. When lining hose 602 saturated with epoxy has exited from an inversion drum a lining employee has pushed solid piece 401 cut from a firestop tape through feeding gab 611 into pocket 601. An area having slashed lines presents an end of solid piece 401. The opposite end of solid piece 401 extends almost to the feeding gab 611. When the firestop piece is inside pocket 601 lining hose 602 is ready to be installed. In one embodiment firestop material 103 is included in a lining hose, which speeds up the installation.

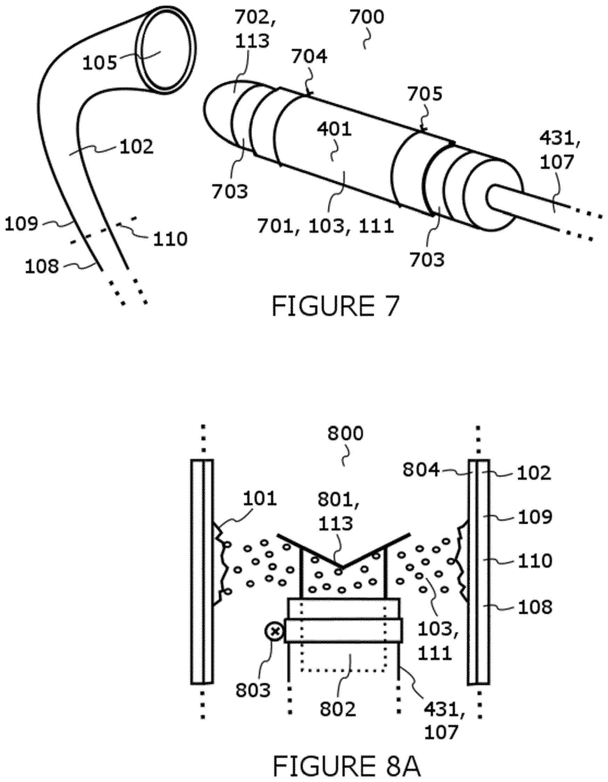

**FIGURE 7** shows the third embodiment 700 of firestop 101, wherein a packer 702 is used in the installation. Packer 702 operates as directing tool 113 because it expands by compressed air or steam. Packer 702 is coupled to conveying tool 107, for example, to hose 431. A piece of plastic wrap 703 is wrapped around packer 702, and multiple times folded fiberglass textile, which is wrapped around plastic wrap 703, operates as cellular material 701. Felt is mentioned here as another example of cellular material 701. A solid piece can be used as the piece of firestop material 103 but in this example some layers of the fiberglass textile are saturated with amorphous mass including firestop material 103. The amorphous mass is composed of liquid and particles.

In one embodiment firestop material 103, which is in solid form, is chopped to (tiny) pieces and the pieces are mixed with epoxy or some other fastener 111.

Firestop material 103 is included in the fiberglass textile layers and those layers are wrapped around plastic wrap 703 that surrounds packer 702. The fiberglass textile is tied with cord pieces 704, 705 to packer 702. Then packer 702 and firestop material attached to it are ready to be conveyed from installation spot 105 into pipe 102. When packer 702 is located in pipe102 at the wanted spot, i.e. at border spot 119 of fire compartments 108, 109, more air is let into it at which time packer 702 expands more and operates as directing tool 113 squeezing the fiberglass textile against pipe 102.

When the epoxy included in the fiberglass textile is dried the air pressure of packer 702 is lowered, after which packer 702 is extracted from pipe 102. The extraction is possible because plastic wrap 703 prevents the epoxy to stick to packer 702. Instead of packer 702 it is possible to use a container to be filled with liquid as directing tool 113.

**FIGURE 8A** shows the fourth embodiment 800 of firestop 101. Pipe 102 is presented as a cross-section when the retrofitting of firestop 101 is under work. In the fourth embodiment directing tool 113 is intended for pneumatically applied mortar, or some other amorphous mass into which firestop material 103 is mixed and which functions as fastener 111. Generally speaking, such nozzle apply for directing tool 113 that is capable to direct amorphous mass towards the inner surface of pipe 102. In this example directing tool 113 includes a part 801 that resembles a chimney hat and is attached with legs to socket 802. Directing tool 113 is attached to the end of hose 431 that operates as conveying tool 107. The end of hose 431 is attached with a hose clip 803 to socket 802. Directing tool 113 is pushed inside pipe 102 for retrofitting of firestop 101. When amorphous mass hits with pressure to part 801 resembling the hat chimney the amorphous mass is dripped. The drips impact to a lining layer 804 and thus firestop 101 become attached to the inner surface of lining layer 804. Lining layer 804 is possibly the original one, or it is added later to pipe 102. If pipe 102 is a galvanized air conditioning pipe the galvanized layer of the pipe corresponds to lining layer 804.

The arrangement shown in figure 8A applies to an implementation of firestop 101, for example, when the implementation concerns an epoxy coated sewer pipe or a galvanized air conditioning pipe.

Directing tool 113 can also be used with robot 441. In one embodiment robot 441 comprises a container for such firestop material that is mixed into amorphous mass and can be injected on the surface of pipe 102.

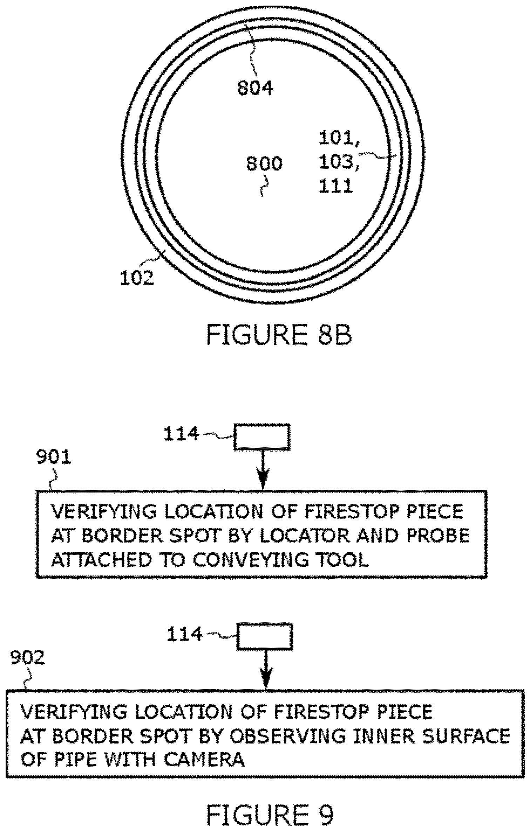

**FIGURE 8B** shows the fourth embodiment 800 of firestop 101, wherein pipe 102 is viewed as a cross-section. Directing tool 113 is extracted from pipe 102 and the amorphous mass, which includes firestop material 103, has dried and is attached tightly to lining layer 804 of pipe 102

**FIGURE 9** shows optional stages relating to verifying of the firestop that is implemented in accordance with embodiment 100, 200, 700, or 800. In one embodiment method 300 comprises verifying 901 by a locator and a probe attached to the conveying tool 107 the location of the piece of firestop material 103 at the border spot. Conveying tool 107 is, for example, push rod 421. Verifying 901 of the location is performed in method 300 after attaching 114 the firestop material. The head of conveying tool 107 and the probe are located at the border spot of fire compartments. The probe sends a signal that is readable with the locator. The locator informs the distance between itself and the probe and it is possible to detect, by using the locator, that firestop 101 is located border spot 110 of the fire compartments. Then push rod 421 is locked to its current location.

In an alternative embodiment of method 300 comprises verifying 902 the location of firestop material 103 at border spot 110 by observing the inner surface of pipe 102 with a camera. It is also possible to verify from the camera pictures in which manner the lining hose has set in pipe 102. A distance from installation spot 105 to border spot 110 is known on the basis of building drawings. In addition, it is known that before the tucking of the lining hose the firestop material is attached to the lining hose at the same distance from installation spot 105. Therefore, the firestop material is located at the correct spot, i.e. at border spot of the fire compartments, if according to the camera pictures the lining hose does not include (too many) wrinkles and the lining hose is not broken off

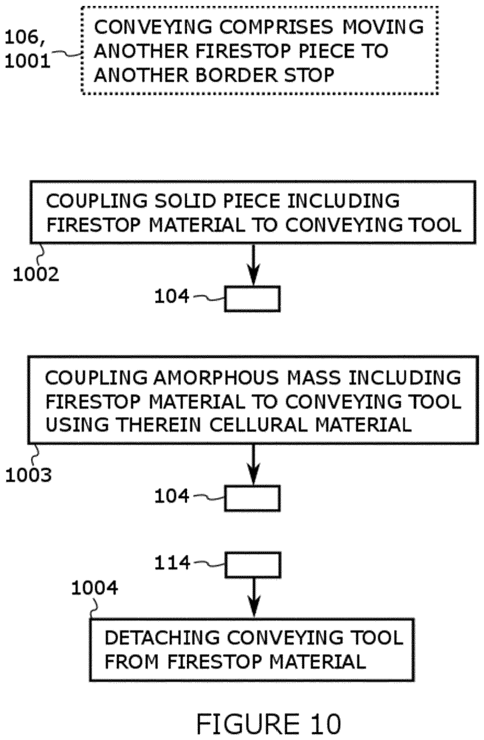

**FIGURE 10** shows other optional stages 1001-904 of method 300 which are not shown in the previous figures.

In one embodiment conveying 106 of firestop material 103 (stage shown in figure 5) comprises also conveying piece 501 of firestop material to border spot 503 of fire compartments 109, 502. This embodiment of method 300 enhances the productivity of the installation work.

In one embodiment method 300 comprises coupling 1002 the solid piece including firestop material 103 to conveying tool 107. Coupling 1002 is performed before revealing 104 the installation spot. The embodiment can be utilized with embodiments 100, 200, 700, and 800 of the firestop.

The following two embodiments apply at least for use with embodiment 700 of the firestop.

In one embodiment method 300 comprises coupling 1003 the firestop material 103 in amorphous form to conveying tool 107 using therein cellular material 701. Coupling 1003 is performed before revealing 104 the installation spot.

In one embodiment method 300 comprises detaching 1004 conveying tool 107 from firestop material 103. Detaching 1004 of conveying tool 107 is performed after attaching 114 of the firestop material.

Appropriate tools for performing method 300 are at least tools that apply for lining or cleaning of the inner surface of pipe 102. Especially, conveying tool 107, fastener 111, and directing tool 113 represent said tools.

Appropriate materials for firestop material 103 are, for example, graffiti, gypsum, cement, or acryl-based firestop masses. Each material to be used as firestop material 103 has a predetermined temperature limit such that a material starts to expand when exceeding the predetermined temperature limit. Firestop material 103 is available in elastic form or as foam to be extruded.

In one embodiment firestop 101 is implemented by injecting and brushing. Then a brush functions as directing tool 113 by which amorphous mass including firestop material 103 is directed towards the inner surface of pipe 102.

In one embodiment firestop 101 is implemented inside pipe 102 by holding a mold with push rod 421, or with some other conveying tool 107 and using firestop material 103 as amorphous mass. The mold should be extendable such that it touches the inner surface of pipe 102 and is able to hold firestop material 103 to be molded inside it. In addition, the mold must be narrow enough (before the molding) such that it can be conveyed by conveying tool 107 inside pipe 102 to the border spot of fire compartments.

In another embodiment firestop 101 is implemented with a tool that resembles a fire collar. The fire collar fits into pipe 102 and can be conveyed therein with conveying tool 107. The tool resembling a fire collar comprises fastener 111 implemented as a mechanical component.

The following components apply for the mechanical component: 1) a string to be strained and whose staining is releasable for attaching 114 or 2) a component resembling a hose clip with a screw such that by screwing the screw a fire collar squeezes against the inner surface of pipe 102. Concerning the both alternatives 1) and 2) attaching 114 can be ensured, for example, by lining firestop 101 against pipe 102.

In addition to the method, the invention concerns firestop 101 retrofitted in pipe 102 that is intended to be used as a pipe conveying fluid, wherein firestop 101 comprises firestop material to be expanded due to heat. The method to be used in the retrofitting of firestop 101 comprises at least the stages shown in figure 3.

The figures illustrate the invention but the material strengths and the dimensions may be wrong or distorted.

## Claims

1. A method (300) for retrofitting a firestop (101) to a pipe (102) that is intended for conveying fluid, the firestop comprising a piece of firestop material (103) to be expanded due to heat,
**characterized in that** the method comprises at least
revealing (104) a pipe inner surface at an installation spot (105) of a lining hose for the retrofitting of the firestop,
conveying (106) by a conveying tool (107) the piece of firestop material from the installation spot along the pipe to a border spot (110) of fire compartments (108, 109),
directing (112) a fastener (111) by a directing tool (113) or by the conveying tool towards the pipe inner surface, and at least one the following tools is the lining hose: the directing tool, the conveying tool; and the method comprises
attaching (114) the piece of the firestop material by the fastener at the border spot of the fire compartments inside the pipe.

2. The method as claimed in claim 1, **characterized in that** the directing (112) comprises
moving (311) the fastener (111) separately from the piece of the firestop material (103).

3. The method as claimed in claim 1, **characterized in that** the conveying (106) the piece of firestop material (103) comprises
conveying (302) the fastener by the conveying tool.

4. The method as claimed in claim 1, **characterized in that** the conveying (106) the piece of firestop material (103) comprises
moving (1001) another piece (501) of firestop material to another border spot (503) of some other fire compartments (109, 502).

5. The method as claimed in claim 1, **characterized in that** the conveying (106) the piece of firestop material (103) comprises
moving (1001) another piece (501) of firestop material to another border spot (503) of some other fire compartments (109, 502) by one of the following tools: a preliner (411), the lining hose functioning as the conveying tool (107).

6. The method as claimed in claim 1, **characterized in that** the method comprises coupling (1002) a solid piece (401) of the firestop material (103) to the conveying tool (107).

7. The method as claimed in claim 1, **characterized in that** the method comprises coupling (1003) the firestop material (103) in amorphous form to conveying tool (107) using therein cellular material (701).

8. The method as claimed in claim 1, **characterized in that** the method comprises detaching (1004) the conveying tool (107) from the piece of the firestop material (103).

9. The method as claimed in claim 1, **characterized in that** the method comprises verifying (901) by a locator and a probe attached to the conveying tool (107) a location of the piece of the firestop material (103) at the border spot (110).

10. The method as claimed in claim 1, **characterized in that** the method comprises verifying (902) a location of the piece of firestop material (103) at the border spot (110) by observing the pipe inner surface with a camera.

## Patentansprüche

1. Verfahren (300) zum Nachrüsten eines Brandschutzes (101) an einem Rohr (102), das zum Fördern von Flüssigkeit vorgesehen ist, wobei der Brandschutz ein Stück des Brandschutzmaterials (103) umfasst, das aufgrund von Wärme expandiert werden soll;
**dadurch gekennzeichnet, dass** das Verfahren mindestens Folgendes umfasst
Freilegen (104) einer Rohrinnenfläche an einem Installationspunkt (105) eines Auskleidungsschlauchs zum Nachrüsten des Brandschutzes;
Fördern (106) des Stücks des Brandschutzmaterials vom Installationspunkt entlang des Rohrs zu einem Grenzpunkt (110) von Brandabteilen (108, 109) mit einem Förderwerkzeug (107);
Richten (112) eines Befestigungselements (111) durch ein Richtwerkzeug (113) oder durch das Förderwerkzeug in Richtung der Rohrinnenfläche, und wobei mindestens eines der folgenden Werkzeuge der Auskleidungsschlauch ist: das Richtwerkzeug, das Förderwerkzeug; und das Verfahren Folgendes umfasst
Anbringen (114) des Stücks des Brandschutzmaterials durch das Befestigungselement an dem Grenzpunkt der Brandabteile innerhalb des Rohrs.

2. Verfahren nach Anspruch 1, **dadurch gekennzeichnet, dass** die Richtung (112) Folgendes umfasst Bewegen (311) des Befestigungselements (111) getrennt von dem Stück des Brandschutzmaterials (103).

3. Verfahren nach Anspruch 1, **dadurch gekennzeichnet, dass** das Fördern (106) des Stücks des Brandschutzmaterials (103) Folgendes umfasst Fördern (302) des Befestigungselements durch das Förderwerkzeug.

4. Verfahren nach Anspruch 1, **dadurch gekennzeichnet, dass** das Fördern (106) des Stücks des Brandschutzmaterials (103) Folgendes umfasst Bewegen (1001) eines anderen Stücks (501) des Brandschutzmaterials zu einem anderen Grenzpunkt (503) einiger anderer Feuerabteile (109, 502).

5. Verfahren nach Anspruch 1, **dadurch gekennzeichnet, dass** das Fördern (106) des Stücks des Brandschutzmaterials (103) Folgendes umfasst Bewegen (1001) eines anderen Stücks (501) des Brandschutzmaterials zu einem anderen Grenzpunkt (503) einiger anderer Brandabteile (109, 502) durch eines der folgenden Werkzeuge: einen Preliner (411), wobei der Auskleidungsschlauch als Förderwerkzeug fungiert (107).

6. Verfahren nach Anspruch 1, **dadurch gekennzeichnet, dass** das Verfahren das Koppeln (1002) eines festen Stücks (401) des Brandschutzmaterials (103) mit dem Förderwerkzeug (107) umfasst.

7. Verfahren nach Anspruch 1, **dadurch gekennzeichnet, dass** das Verfahren das Koppeln (1003) des Brandschutzmaterials (103) in amorpher Form mit dem Förderwerkzeug (107) unter Verwendung des Zellmaterials (701) darin umfasst.

8. Verfahren nach Anspruch 1, **dadurch gekennzeichnet, dass** das Verfahren das Ablösen (1004) des Förderwerkzeugs (107) von dem Stück des Brandschutzmaterials (103) umfasst.

9. Verfahren nach Anspruch 1, **dadurch gekennzeichnet, dass** das Verfahren das Verifizieren (901) durch einen Ortungsgerät und eine an dem Förderwerkzeug (107) angebrachte Sonde eines Ortes des Stücks des Brandschutzmaterials (103) an dem Grenzpunkt (110) umfasst.

10. Verfahren nach Anspruch 1, **dadurch gekennzeichnet, dass** das Verfahren das Überprüfen (902) eines Ortes des Stücks des Brandschutzmaterials (103) am Grenzpunkt (110) durch Beobachten der Rohrinnenfläche mit einer Kamera umfasst.

## Revendications

1. Procédé (300) pour adapter un coupe-feu (101) à un tuyau (102) qui est destiné à transporter un fluide, le coupe-feu comprenant une pièce de matériau coupe-feu (103) à dilater sous l'effet de la chaleur,
**caractérisé en ce que** le procédé comprend au moins
la révélation (104) d'une surface intérieure de tuyau au niveau d'un emplacement d'installation (105) d'un tuyau de revêtement pour l'adaptation du coupe-feu,
le transport (106) par un outil de transport (107) de la pièce de matériau coupe-feu depuis l'emplacement d'installation le long du tuyau vers un emplacement limite (110) de compartiments coupe-feu (108, 109),
l'orientation (112) d'une attache (111) par un outil d'orientation (113) ou par l'outil de transport vers la surface intérieure de tuyau, et au moins l'un des outils suivants est le tuyau de revêtement : l'outil d'orientation, l'outil de transport ; et le procédé comprend
la fixation (114) de la pièce du matériau coupe-feu par l'attache au niveau de l'emplacement limite des compartiments coupe-feu à l'intérieur du tuyau.

2. Procédé selon la revendication 1, **caractérisé en ce que** l'orientation (112) comprend
le déplacement (311) de l'attache (111) séparément de la pièce du matériau coupe-feu (103).

3. Procédé selon la revendication 1, **caractérisé en ce que** le transport (106) de la pièce de matériau coupe-feu (103) comprend
le transport (302) de l'attache par l'outil de transport.

4. Procédé selon la revendication 1, **caractérisé en ce que** le transport (106) de la pièce de matériau coupe-feu (103) comprend
le déplacement (1001) d'une autre pièce (501) de matériau coupe-feu vers un autre emplacement limite (503) de certains autres compartiments coupe-feu (109, 502).

5. Procédé selon la revendication 1, **caractérisé en ce que** le transport (106) de la pièce de matériau coupe-feu (103) comprend
le déplacement (1001) d'une autre pièce (501) de matériau coupe-feu vers un autre emplacement limite (503) de certains autres compartiments coupe-feu (109, 502) par l'un des outils suivants : un pré-revêtement (411), le tuyau de revêtement servant d'outil de transport (107).

6. Procédé selon la revendication 1, **caractérisé en ce que** le procédé comprend le couplage (1002) d'une pièce solide (401) du matériau coupe-feu (103) à l'outil de transport (107).

7. Procédé selon la revendication 1, **caractérisé en ce que** le procédé comprend le couplage (1003) du matériau coupe-feu (103) sous forme amorphe à l'outil de transport (107) en utilisant un matériau cellulaire (701) à l'intérieur.

8. Procédé selon la revendication 1, **caractérisé en ce que** le procédé comprend le détachement (1004) de l'outil de transport (107) de la pièce du matériau coupe-feu (103).

9. Procédé selon la revendication 1, **caractérisé en ce que** le procédé comprend la vérification (901) par un localisateur et une sonde fixés à l'outil de transport (107) d'un emplacement de la pièce du matériau coupe-feu (103) au niveau de l'emplacement limite (110).

10. Procédé selon la revendication 1, **caractérisé en ce que** le procédé comprend la vérification (902) d'un emplacement de la pièce de matériau coupe-feu (103) au niveau de l'emplacement limite (110) en observant la surface intérieure de tuyau avec une caméra.
